(19) Europäisches Patentamt
European Patent Office
Office européen des brevets

(11) **EP 4 223 401 A1**

(12) **EUROPEAN PATENT APPLICATION**
published in accordance with Art. 153(4) EPC

(43) Date of publication:
09.08.2023 Bulletin 2023/32

(51) International Patent Classification (IPC):
*B01F 23/40* (2022.01)    *B01F 25/42* (2022.01)
*C08G 101/00* (2006.01)    *C08G 18/00* (2006.01)

(21) Application number: 21875744.1

(22) Date of filing: 29.09.2021

(52) Cooperative Patent Classification (CPC):
**B01F 23/40; B01F 25/42; C08G 18/00;**
C08G 2101/00

(86) International application number:
**PCT/JP2021/036004**

(87) International publication number:
**WO 2022/071447 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 02.10.2020 JP 2020167976

(71) Applicant: SEKISUI CHEMICAL CO., LTD.
**Osaka-shi
Osaka
530-8565 (JP)**

(72) Inventors:
• KAKIMOTO, Yuu
 **Hasuda-shi, Saitama 349-0198 (JP)**
• USHIMI, Takehiko
 **Mishima-gun, Osaka 618-0021 (JP)**
• MATSUKI, Nobuo
 **Mishima-gun, Osaka 618-0021 (JP)**

(74) Representative: **Ter Meer Steinmeister & Partner
Patentanwälte mbB
Nymphenburger Straße 4
80335 München (DE)**

(54) **MIXING SYSTEM**

(57)    The mixing system includes a first container filled with a polyol composition, a second container filled with an isocyanate composition, and a stationary mixer configured to mix the polyol composition discharged from the first container and the isocyanate composition discharged from the second container. The polyol composition includes a polyol, a catalyst, and a low boiling point compound having a boiling point of less than 0°C. The isocyanate composition includes an isocyanate compound and a low boiling point compound having a boiling point of less than 0°C. The first container and the second container each have an internal pressure in a range of 0.3 to 1.0 MPa at 35°C, and a mixer portion of the stationary mixer has a length of 30 to 230 mm. A mixing system can be provided that enhances the mixability of a polyol composition and a polyisocyanate composition in a stationary mixer and prevents curing in the stationary mixer.

Fig. 1

EP 4 223 401 A1

**Description**

Technical Field

The present invention relates to a mixing system, and more particularly to a mixing system for mixing a polyol composition and a polyisocyanate composition to obtain a polyurethane foam.

Background Art

Conventionally, polyurethane foams have been used as a thermal insulator for vehicles such as automobiles, rail carriages, and ships, as well as in buildings. Polyurethane foams have also been used as a repair agent for filling defective portions that have occurred in vehicles, buildings, and the like. Recently, there is an increasing need to impart fire retardancy to these insulation materials and repair agents.

A widely used polyurethane foam is a two-component polyurethane in which a polyol liquid agent and an isocyanate liquid agent filled in separate containers are mixed to form a foam.

Two-component type polyurethane is sometimes used in aerosol containers because each liquid can be discharged and mixed from a container with a relatively simple configuration. When the two-component polyurethane is used in an aerosol container, one container is filled with a polyol compound and a low boiling point compound, and the other container is filled with a polyisocyanate compound and a low boiling point compound. A polyol liquid agent and a polyisocyanate liquid agent are discharged from each container by the vapor pressure of the low boiling point compound, and mixed to form a polyurethane foam.

Hydrofluorocarbons (HFCs), hydrochlorofluorocarbons (HCFCs), dimethyl ether (DME), liquefied petroleum gas (LPG), and the like are used as the low boiling point compound used in the aerosol containers. In addition, HFCs and HCFCs have a high global warming potential, so there is a need for compounds that can replace them.

For example, Patent Literature 1 describes a two-component aerosol composition for a rigid polyurethane foam containing a specific amount of a low boiling point compound, and which does not have an adverse impact on global warming due to the use of liquefied petroleum gas (LPG), dimethyl ether (DME), and the like as the low boiling point compound.

When using such a two-component polyurethane, a small device such as a caulking gun or a spray can is used. These small devices include a stationary mixer such as a static mixer as the mixer for promoting the mixing of the two liquids (see Patent Literature 3, for example).

Further, in the polyurethane foam, a fire retardant is sometimes used for the purpose of imparting fire retardancy. In a two-component polyurethane aerosol, the fire retardant is blended with the polyol. As such a fire retardant, as disclosed in Patent Literature 2, a liquid phosphate ester compound such as tris(β-chloropropyl)phosphate is used.

Citation List

Patent Literature

PTL1: JP 2006-169474 A
PTL2: JP 11-49837 A
PTL3: WO 2020/067139 A

Summary of Invention

Technical Problem

A two-component polyurethane aerosol requires a high discharge flow rate when the polyol liquid agent and isocyanate liquid agent are discharged from each container. If the discharge flow rate is insufficient, the polyol liquid agent and the isocyanate liquid agent do not sufficiently mix, and the polyurethane foam is not properly formed, resulting in deterioration of various properties such as fire retardancy.

In addition, in recent years, due to increasing awareness of disaster prevention, polyurethane foams used as a thermal insulator may be required to have high fire retardancy, and the use of fire retardants with a high fire retardancy effect is being investigated. However, many fire retardants with a high fire retardancy effect are in solid form, and when blended with the polyol, the fluidity of the polyol is reduced. As a result, the discharge flow rate of the polyol liquid agent in the aerosol is insufficient, and problems such as insufficient mixing of the polyol liquid agent with the isocyanate liquid agent occur, and fire retardancy cannot be sufficiently increased.

In order to sufficiently mix the polyol liquid agent and the isocyanate liquid agent and increase fire retardancy, it is possible to lengthen the mixer portion of the stationary mixer, but if the mixer portion is too long, the mixture may cure in the mixer, and discharge failure may occur.

Accordingly, it is an object of the present invention to provide a mixing system that enhances the mixability of a polyol composition and a polyisocyanate composition in a stationary mixer and prevents curing in the stationary mixer.

Solution to Problem

As a result of intensive studies to solve the problems described above, the present inventors found that the above-described problems can be solved by controlling the internal pressure of the container filled with the polyol composition and the internal pressure of the container filled with the isocyanate composition within a certain range, and setting the length of the mixer portion of the stationary mixer to a specific range, to thereby complete the present invention.

That is, the present invention is as follows.

[1] A mixing system comprising:

a first container filled with a polyol composition;
a second container filled with an isocyanate composition; and
a stationary mixer configured to mix the polyol composition discharged from the first container and the isocyanate composition discharged from the second container, wherein
the polyol composition comprises a polyol, a catalyst, and a low boiling point compound having a boiling point of less than 0°C,
the isocyanate composition comprises an isocyanate compound and a low boiling point compound having a boiling point of less than 0°C,
the first container and the second container each have an internal pressure in a range of 0.3 to 1.0 MPa at 35°C, and
a mixer portion of the stationary mixer has a length of 30 to 230 mm.

[2] The mixing system according to [1], wherein the polyol composition comprises a trimerization catalyst as the catalyst.
[3] The mixing system according to [1] or [2], wherein an injection port of the stationary mixer is divided into two holes.
[4] The mixing system according to any one of [1] to [3], wherein the polyol composition further comprises a filler.
[5] The mixing system according to any one of [1] to [4], wherein the low boiling point compound includes a hydrofluoroolefin.
[6] The mixing system according to any one of [1] to [5], wherein the low boiling point compound includes at least one selected from air, carbon dioxide, and an inert gas.
[7] The mixing system according to [6], wherein the inert gas is nitrogen.
[8] The mixing system according to any one of [1] to [7], further comprising a discharge gun.

Advantageous Effects of Invention

According to the present invention, a mixing system can be provided that enhances the mixability of a polyol composition and a polyisocyanate composition in a stationary mixer and prevents curing in the stationary mixer.

Brief Explanation of Drawings

[Fig. 1] Fig. 1 is a schematic view illustrating one mode of a mixing system of the present invention.
[Fig. 2] Fig. 2 is a schematic view illustrating another mode of a mixing system of the present invention.

Description of Embodiments

[Mixing system]

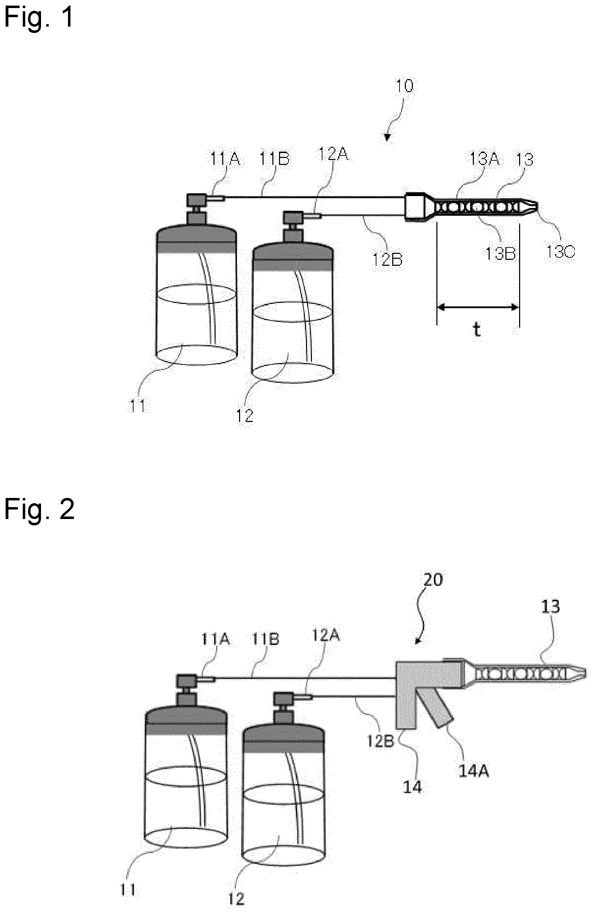

An outline of the mixing system of the present invention will now be described with reference to Fig. 1. Fig. 1 is a schematic diagram illustrating an outline of the mixing system of the present invention. A mixing system 10 of the present invention comprises a first container 11 filled with a polyol composition, a second container 12 filled with an isocyanate composition, and a stationary mixer (static mixer) 13 for mixing mix the polyol composition discharged from the first container and the isocyanate composition discharged from the second container.

The first container 11 and the second container 12 each have an internal pressure at 35°C in a range of 0.3 to 1.0 MPa. If the internal pressure is less than 0.3 MPa, the injection pressure is low, and sufficient discharge and mixing cannot be achieved. On the other hand, if the internal pressure exceeds 1.0 MPa, the container needs to have higher pressure resistance. From these viewpoint, the internal pressure of each of the first container and the second container is preferably in the range of 0.4 to 0.9 MPa, and more preferably in a range of 0.5 to 0.8 MPa.

The first container and the second container may have the same internal pressure, or different internal pressure.

The first and second containers 11 and 12 are preferably spray cans for an aerosol. Inside the first container 11, a part of the polyol composition may be vaporized to form a gas phase, and inside the second container 12, a part of the isocyanate composition may be vaporized to form a gas phase.

The polyol composition and the isocyanate composition discharged from the first and second containers 11 and 12 are mixed while being foamed by a foaming agent or the like, and the isocyanate and the polyol react to form a polyurethane foam (polyurethane composition).

The mixing system 10 also comprises a stationary mixer (static mixer; hereinafter, also simply referred to as "mixer") 13. The stationary mixer 13 does not have a driving part, and mixes fluids by passing the fluids through the inside of a tubular body. As illustrated in Fig. 1, examples of the stationary mixer include a mixer having a mixer element 13B arranged inside a tubular body 13A. The mixer element 13B may be, for example, formed in a spiral shape, or formed with a plurality of baffle plates, or the like.

In the mixing system 10 of the present invention, discharge ports 11A and 12A of, respectively, the first and second containers 11 and 12 are connected to the mixer 13 via feed lines 11B and 12B. A valve such as a stem valve may be provided at the discharge ports 11A and 12A. The polyol composition and the isocyanate composition discharged from the first and second containers 11 and 12 are fed to the mixer 13 through feed lines 11B and 12B, respectively, and mixed in the mixer 13. Here, the stationary mixer preferably has two separate injection ports, and the polyol composition and the isocyanate composition are preferably fed separately to the mixer 13 from each injection port of the two holes. As a result, the polyol composition and the isocyanate composition can be prevented from coming into contact before being injected into the mixer. The polyol composition and the isocyanate composition mixed in the mixer 13 are sprayed onto the target surface using an injector or the like. In addition, the stationary mixer may have the function of an injector. In that case, as illustrated in Fig. 1, the mixture of the polyol composition and the isocyanate composition mixed inside the tubular body 13A may be sprayed from a tip 13C of the tubular body

In the present invention, as illustrated in Fig. 1, it is essential that a length (t) of the mixer portion of the stationary mixer 13 is in a range of 30 mm to 230 mm. If the length of the mixer portion is less than 30 mm, the mixing of the polyol composition and the polyisocyanate composition is insufficient, resulting in problems such as insufficient foaming or insufficient fire retardancy of the formed urethane foam. On the other hand, if the length of the mixer portion exceeds 230 mm, the reaction between the polyol composition and the isocyanate composition occurs in the mixer of the stationary mixer, causing discharge defects to occur due to partial curing.

From the above viewpoints, the length of the mixer portion of the stationary mixer is preferably in a range of 50 mm to 200 mm, and more preferably in a range of 60 mm to 190 mm.

Here, the mixer portion refers to the portion of the tubular body 13A having the mixer element 13B.

Fig. 1 illustrates a mode in which the polyol composition and the polyisocyanate composition discharged from the first and second containers 11 and 12 are introduced into the mixer, but a discharge gun, a jig, and the like may be provided before the introduction into the mixer.

Fig. 2 illustrates a mixing system 20 as an example of a mode in which a discharge gun is provided before the introduction into the mixer. The mixing system 20 comprises a first container 11 and a second container 12, feed lines 11B and 12B, a discharge gun 14, and a mixer 13. The first container 11 and the second container 12 are as described above, and contain the polyol composition and the polyisocyanate composition, respectively. The polyol composition and the polyisocyanate composition are fed from the first and second containers to the discharge gun 14 through feed lines 11B and 12B, respectively. The discharge gun 14 includes a lever 14A and has an ON-OFF feed mechanism. Specifically, when the lever 14A is pulled, the polyol composition and the polyisocyanate composition are fed to the mixer 13, and when the lever 14A is released, the feeding to the mixer 13 is stopped. By using the mixing system 20 including the discharge gun 14, feeding can be carried out as required, thereby improving workability when forming the polyurethane foam.

[Polyol composition]

The polyol composition of the present invention includes a polyol, a catalyst, and a low boiling point compound having a boiling point of less than 0°C.

(Polyol)

The polyol composition of the present invention contains a polyol.

Examples of the polyol used in the present invention include a polylactone polyol, a polycarbonate polyol, an aromatic polyol, an alicyclic polyol, an aliphatic polyol, a polyester polyol, a polymer polyol, a polyether polyol, and the like.

Examples of the polylactone polyol include polypropiolactone glycol, polycaprolactone glycol, polyvalerolactone glycol, and the like.

Examples of the polycarbonate polyol include a polyol obtained by a dealcohol reaction between a hydroxyl group-containing compound, such as ethylene glycol, propylene glycol, butanediol, pentanediol, hexanediol, octanediol, and nonanediol, and ethylene carbonate, propylene carbonate, and the like.

Examples of the aromatic polyol include bisphenol A, bisphenol F, phenol novolac, cresol novolac, and the like.

Examples of the alicyclic polyol include cyclohexanediol, methylcyclohexanediol, isophoronediol, dicyclohexylmethanediol, dimethyldicyclohexylmethanediol, and the like.

Examples of the aliphatic polyol include ethylene glycol, propylene glycol, butanediol, pentanediol, hexanediol, and the like.

Examples of the polyester polyol include a polymer obtained by dehydration condensation of a polybasic acid and a polyhydric alcohol, a polymer obtained by ring-opening polymerization of a lactone such as ε-caprolactone and α-methyl-ε-caprolactone, and a condensate of hydroxycarboxylic acid and the polyhydric alcohol or the like.

Examples of the polybasic acid include adipic acid, azelaic acid, sebacic acid, isophthalic acid (m-phthalic acid), terephthalic acid (p-phthalic acid), succinic acid, and the like. Further, examples of the polyhydric alcohol include bisphenol A, ethylene glycol, 1,2-propylene glycol, 1,4-butanediol, diethylene glycol, 1,6-hexane glycol, neopentyl glycol, and the like.

Examples of the hydroxycarboxylic acid include castor oil, a reaction product of castor oil and ethylene glycol, and the like.

Examples of the polymer polyol include a polymer obtained by graft-polymerizing an ethylenically unsaturated compound such as acrylonitrile, styrene, methyl acrylate, and methacrylate with an aromatic polyol, an alicyclic polyol, an aliphatic polyol, a polyester polyol, or the like, a polybutadiene polyol, a hydrogenated additive thereof, and the like.

Examples of the polyether polyol include a polymer obtained by subjecting at least one kind of alkylene oxide (hereinafter, also referred to as "AO") to ring-opening polymerization in the presence of at least one kind of low-molecular-weight active hydrogen compound having two or more active hydrogens and the like. Examples of the AO include ethylene oxide (hereinafter, also referred to as "EO"), 1,2-propylene oxide (hereinafter, also referred to as "PO"), 1,3-propylene oxide, 1,2-butylene oxide, 1,4-butylene oxide, and the like. Among these, as AO, PO, EO and 1,2-butylene oxide are preferable, and PO and EO are more preferable. When two or more kinds of AO are used (for example, PO and EO), the addition method may be block addition, random addition, or a combination of these.

Examples of the low-molecular-weight active hydrogen compound having two or more active hydrogens include a diol such as ethylene glycol, propylene glycol, butylene glycol, and 1,6-hexanediol, a triol such as glycerin and trimethylolpropane, tetra to octavalent alcohols such as pentaerythritol, sorbitol, mannitol, sorbitan, diglycerin, dipentaerythritol and the like, sucrose, glucose, mannose, fructose, methylglucoside, derivatives of these, and the like, aromatic polyols such as fluoroglucinol, cresol, pyrogallol, catechol, hydroquinone, bisphenol A, bisphenol F, bisphenol S, 1,3,6,8-tetrahydroxynaphthalene, and 1,4,5,8-tetrahydroxyanthracene, polyfunctional polyols such as castor oil polyol, a (co)polymer of hydroxyalkyl (meth)acrylate and a polyvinyl alcohol, a condensate of a phenol and formaldehyde (Novolak), amines such as ethylenediamine and butylenediamine, and the like.

As the polyol used in the present invention, a polyester polyol and a polyether polyol are preferable. Further, a polyol having two hydroxyl groups is preferable. Among them, a polyester polyol obtained by dehydration condensation of a polybasic acid having an aromatic ring, such as isophthalic acid (m-phthalic acid) and terephthalic acid (p-phthalic acid), and a dihydric alcohol, such as bisphenol A, ethylene glycol, and 1,2-propylene glycol, is more preferable.

The polyol has a hydroxyl value of preferably 20 to 300 mgKOH/g, more preferably 30 to 250 mgKOH/g, and further preferably 50 to 220 mgKOH/g. When the hydroxyl value of the polyol is equal to or less than the upper limit values, the viscosity of the polyol composition tends to decrease, which is preferable from the viewpoint of handleability and the like. On the other hand, when the hydroxyl value of the polyol is equal to or more than the lower limit values, strength is increased due to an increase in the crosslinking density of the polyurethane foam.

The hydroxyl value of the polyol can be measured according to JIS K 1557-1: 2007.

The content of the polyol in the polyol composition of the present invention is preferably 10 to 80% by mass, more preferably 20 to 75% by mass, and further preferably 25 to 70% by mass. When the polyol content is equal to or more than the lower limit values, the reaction between the polyol and the polyisocyanate occurs more easily. On the other hand, when the content of the polyol is equal to or less than the upper limit values, the viscosity of the polyol composition does not become too high, and the handleability of the polyol composition increases.

(Catalyst)

The polyol composition of the present invention preferably contains, as a catalyst, at least a trimerization catalyst, and more preferably contains both a resinification catalyst and a trimerization catalyst.

<Resinification catalyst>

The resinification catalyst is a catalyst that promotes the reaction between the polyol compound and the polyisocyanate compound. Examples of the resinification catalyst include an amine-based catalyst such as an imidazole compound and a piperazine compound, and a metal-based catalyst.

Examples of the imidazole compound include a tertiary amine in which the secondary amine at the 1-position of the imidazole ring is replaced with an alkyl group, an alkenyl group, or the like. Specific examples include N-methylimidazole, 1,2-dimethylimidazole, 1-ethyl-2-methylimidazole, 1-methyl-2-ethylimidazole, 1,2-diethylimidazole, 1-isobutyl-2-methylimidazole. Further, an imidazole compound in which the secondary amine in the imidazole ring is replaced with a cyanoethyl group may be used.

In addition, examples of the piperazine compound include a tertiary amine such as N-methyl-N'N'-dimethylaminoethylpiperazine and trimethylaminoethylpiperazine.

Examples of the amine-based catalyst include, in addition to the imidazole compound and the piperazine compound, various tertiary amines such as pentamethyldiethylenetriamine, triethylamine, N-methylmorpholinbis(2-dimethylaminoethyl)ether, N,N,N',N",N"-pentamethyldiethylenetriamine, N,N,N'-trimethylaminoethyl-ethanolamine, bis(2-dimethylaminoethyl)ether, N,N-dimethylcyclohexylamine, diazabicycloundecene, triethylenediamine, tetramethylhexamethylenediamine, tripropylamine.

Examples of the metal-based catalyst include a metal salt of lead, tin, bismuth, copper, zinc, cobalt, nickel, and the like, and preferably an organic acid metal salt of lead, tin, bismuth, copper, zinc, cobalt, nickel and the like. More preferably, examples include an organic acid tin salt such as dibutyltin dilaurate, dioctyltin dilaurate, and dioctyltin versatate, an organic acid bismuth salt such as bismuth trioctate and bismuth tris(2-ethylhexanoate). Among them, an organic acid bismuth salt is preferable.

The resinification catalyst may be used alone or in combination of two or more. Among the above, an imidazole compound is preferred.

The content of the resinification catalyst (when two or more kinds of resinification catalyst are contained, the total thereof) is preferably 1 to 30 parts by mass, more preferably 3 to 25 parts by mass, and further preferably 5 to 20 parts by mass, with respect to 100 parts by mass of the polyol. When the content of the resinification catalyst is equal to or more than the lower limit values, a urethane bond tends to form, and the reaction proceeds rapidly. On the other hand, when the content is equal to or less than the upper limit values, the reaction rate is controlled more easily, and the stationary mixer is less likely to suffer from clogging due to curing of the mixture of the polyol composition and the isocyanate composition.

The polyol composition of the present invention may contain, together with the resinification catalyst, a substance that includes impurities (for example, a diluent, etc.) other than the resinification catalyst component that functions as a resinification catalyst. In this case, the mass of only the resinification catalyst component excluding impurities from the substance is the "content of resinification catalyst".

<Trimerization catalyst>

The polyol composition of the present invention preferably contains a trimerization catalyst. The trimerization catalyst is a catalyst that promotes the formation of an isocyanurate rings by causing the isocyanate groups included in the polyisocyanate to react and trimerize. Including a trimerization catalyst improves the fire retardancy of the polyurethane foam. Examples of trimerization catalysts that can be used include a nitrogen-containing aromatic compound such as tris(dimethylaminomethyl)phenol, 2,4-bis(dimethylaminomethyl)phenol, and 2,4,6-tris(dialkylaminoalkyl)hexahydro-S-triazine, a carboxylic acid alkali metal salt such as potassium acetate, potassium 2-ethylhexanoate, and potassium octylate, a tertiary ammonium salt such as a trimethylammonium salt, a triethylammonium salt, and a triphenylammonium salt, a quaternary ammonium salt such as a tetramethylammonium salt, a tetraethylammonium salt, a tetraphenylammonium salt, a triethylmonomethylammonium salt, and a carboxylic acid quaternary ammonium salt. These may be used alone or in combination of two or more.

Among these, one or more carboxylic acid salts selected from the group consisting of a carboxylic acid alkali metal salt and a carboxylic acid quaternary ammonium salt is preferable. Even among those, a carboxylic acid quaternary ammonium salt is more preferable. These carboxylic acid salt trimerization catalysts allow the reaction to proceed immediately from the start of the trimerization reaction, and the amount of unreacted isocyanate can be suppressed to a low level. As a result, the fire retardancy of the polyurethane foam can be improved.

The content of the trimerization catalyst (when two or more kinds of trimerization catalysts are contained, the total thereof) is preferably 0.5 to 20 parts by mass, more preferably 1 to 15 parts by mass, and further preferably 2 to 10 parts by mass, with respect to 100 parts by mass of the polyol. When the content of the trimerization catalyst is equal to or more than the lower limit values, trimerization of polyisocyanate occurs more easily, and the fire retardancy of the obtained polyurethane foam is improved. On the other hand, when the content of the trimerization catalyst is equal to or less than the upper limit values, the reaction is controlled more easily, and the stationary mixer does not suffer from clogging due to curing of the mixture of the polyol composition and the isocyanate composition.

The polyol composition of the present invention may contain, together with the trimerization catalyst, a substance that includes impurities other than the trimerization catalyst component that functions as the trimerization catalyst. In this case, the mass of only the trimerization catalyst component excluding impurities from the substance is the "content of the trimerization catalyst."

The total content of the trimerization catalyst and the resinification catalyst in the polyol composition of the present invention is not particularly limited, and is preferably 1 to 40 parts by mass, more preferably 5 to 35 parts by mass, and further preferably 10 to 30 parts by mass, with respect to 100 parts by mass of the polyol. When the total content of both catalysts in the polyol composition of the present invention is equal to or more than the lower limit values, the formation of urethane bonds and trimerization proceed appropriately, and the fire retardancy of the polyurethane foam tends to be good. Further, when the total content of both catalysts in the polyol composition of the present invention is equal to or less than the upper limit values, the urethanization and the trimerization reaction are controlled more easily, and the stationary mixer is less likely to suffer from clogging due to curing of the mixture of the polyol composition and the isocyanate composition.

In the polyol composition of the present invention, a preferable range of the content of the trimerization catalyst / content of the resinification catalyst is 1/10 to 1/1, a more preferable range is 1/5 to 1/1, and a further preferable range is 1/3 to 1/1. When the content of the trimerization catalyst / content of the resinification catalyst is equal to or more than the lower limit values, the formation of urethane bonds and trimerization proceed appropriately, and the fire retardancy of the polyurethane foam tends to be good. On the other hand, when the content of the trimerization catalyst / content of the resinification catalyst is equal to or less than the upper limit values, the stationary mixer is less likely to suffer from clogging due to curing of the mixture of the polyol composition and the isocyanate composition.

(Low boiling point compound)

The polyol composition and isocyanate composition of the present invention each contain a low boiling point compound having a boiling point of less than 0°C. Due to the low boiling point compound, the internal pressure of the first container and second container at 35°C can be controlled to 0.3 to 1.0 MPa. The higher the vapor pressure of the low boiling point compound, the higher the internal pressure in the container. Further, the higher the compatibility with the polyol or isocyanate, the lower the internal pressure in the container. Therefore, the internal pressure in the container can be controlled based on the vapor pressure and content of the low boiling point compound, the compatibility between the low boiling point compound and the polyol, the compatibility between the low boiling point compound and the isocyanate, and the like.

In addition, the low boiling point compound in the polyol composition not only discharges the polyol composition, it also vaporizes when the polyol composition is discharged, thereby causing the polyol composition and the polyurethane composition described later to foam. That is, the low boiling point compound also has a function as a foaming agent. In addition, in this specification, boiling point means the boiling point in 1 atmosphere. Moreover, boiling point refers to the boiling point of the low boiling point compound alone, and not the azeotropic boiling point when the low boiling point compound azeotropes with another compound, for example.

When the boiling point of the low boiling point compound exceeds 0°C, it becomes particularly difficult to discharge a polyol composition that includes a filler. From the viewpoint of making it easier to discharge the polyol composition, the boiling point of the low boiling point compound is preferably - 10°C or lower, and more preferably -15°C or lower.

The low boiling point compound used in the present invention is not particularly limited as long as it has a boiling point of less than 0°C, and examples thereof may include a hydrocarbon having 2 to 5 carbon atoms, a dimethyl ether (DME, boiling point: -24°C), a hydrofluoroolefin (HFO), a hydrofluorocarbon (HFC), air (compressed air), carbon dioxide (boiling point: - 78.5°C), an inert gas, and the like. Examples of the inert gas include nitrogen (boiling point: -195.8°C) and argon (boiling point: -185.8°C).

Among these, it is preferable to use HFO, air, carbon dioxide, or an inert gas such as nitrogen. By using HFO, air, carbon dioxide, or an inert gas, it is easier to improve the fire retardancy of the polyurethane foam without causing the low boiling point compound to become a combustible product. Moreover, from the viewpoint of handleability, the low boiling point compound more preferably includes an HFO.

The low boiling point compound may be used alone or in combination of two or more. For example, it is preferable to use a combination of dimethyl ether and LPG, and it is also preferable to further combine these with nitrogen. In addition, it is particularly preferable to use an HFO such as 1,3,3,3-tetrafluoropropene (HFO-1234ze) in combination with air, carbon dioxide, or an inert gas, and it is further preferable to use an HFO such as HFO-1234ze in combination with nitrogen. By using an inert gas in combination with an HFO, the decrease in discharge pressure due to use is suppressed, and thus the mixability is further improved.

Specific examples of the hydrocarbon having 2 to 5 carbon atoms include propane (boiling point: -42°C), isobutane (boiling point: -11.7°C), normal butane (boiling point: -0.5°C), and the like. Of the hydrocarbon having 2 to 5 carbon atoms and dimethyl ether, preferred specific examples include dimethyl ether, a mixed solvent of dimethyl ether with propane, isobutane, or normal butane, and the like.

Further, for example, LPG (liquefied petroleum gas) and the like, which contains propane and butane as main components, is also a suitable specific example.

Examples of the hydrofluoroolefin include fluoroalkenes having about 3 to 6 carbon atoms. The hydrofluoroolefin may be a hydrochlorofluoroolefin having a chlorine atom, and therefore may be a chlorofluoroalkene or the like having about 3 to 6 carbon atoms. A preferable hydrofluoroolefin is a fluoroalkene having 3 or 4 carbon atoms, and a more preferable hydrofluoroolefin is a fluoroalkene having 3 carbon atoms.

Specifically, examples include trifluoropropene, a tetrafluoropropene such as HFO-1234, a pentafluoropropene such as HFO-1225, a chlorotrifluoropropene such as HFO-1233, chlorodifluoropropene, chlorotrifluoropropene, chlorotetrafluoropropene. More specifically, examples include trans-1,3,3,3-tetrafluoropropene (HFO-1234ze(E), boiling point: -19°C), cis-1,2,3,3,3-pentafluoropropene (HFO-1225ye(Z), boiling point -19°C), 3,3,3-trifluoropropene (HFO-1243zf, boiling point: -18°C), 2,3,3,3-tetrafluoropropene (HFO-1234yf, boiling point: -29°C), 1,1,3,3,3-pentafluoropropene (HFO-1225zc, boiling point: - 21°C), trans-1,2,3,3,3-pentafluoropropene (HFO-1225ye(E), boiling point: -10°C), and the like.

These hydrofluoroolefins may be used alone or in combination of two or more.

Specific examples of the hydrofluorocarbon (HFC) include trifluoromethane (HFC-23, boiling point: about -82°C), difluoromethane (HFC-32, boiling point: about -51.7°C), 1,1,1,2-tetrafluoroethane (HFC-134a, boiling point: about -26.2°C), and the like.

These hydrofluorocarbons may be used alone or in combination of two or more. Further, the above-described HFO and HFC may be mixed for use.

The content of the low boiling point compound is preferably 1 to 60 parts by mass, more preferably 5 to 50 parts by mass, further preferably 7 to 45 parts by mass, and even further preferably 10 to 40 parts by mass, with respect to 100 parts by mass of the polyol. When the content of the foaming agent is equal to or more than the lower limit values, foaming is promoted, and the density of the resulting polyurethane foam can be reduced. On the other hand, when the content of the foaming agent is equal to or less than the upper limit values, it is possible to suppress foaming from progressing excessively.

The polyol composition of the present invention may contain water from the viewpoint of adjusting the isocyanate index and ease of handling.

(Phosphate ester)

The polyol composition of the present invention may contain a phosphate ester. When the polyol composition of the present invention contains a phosphate ester, the fire retardancy of the polyurethane foam is improved.

The phosphate ester is preferably a liquid fire retardant that is a liquid at normal temperature (23°C) and normal pressure (1 atm). By containing a phosphate ester, which is a liquid fire retardant, the fire retardancy of the polyurethane composition of the present invention can be more easily improved without substantially reducing the discharge flow rate, mixability, and the like of the polyol composition of the present invention.

As the phosphoric acid ester, it is preferable to use a monophosphoric acid ester, a condensed phosphoric acid ester, or the like. Examples of the monophosphoric acid ester include a trialkyl phosphate such as trimethyl phosphate, triethyl phosphate, tributyl phosphate, and tri(2-ethylhexyl) phosphate, a halogen-containing phosphate such as tris(β-chloropropyl) phosphate, a trialkoxy phosphate such as tributoxyethyl phosphate, an aromatic ring-containing phosphoric acid ester such as tricresyl phosphate, trixylenyl phosphate, tris(isopropylphenyl) phosphate, cresyldiphenyl phosphate, and diphenyl(2-ethylhexyl) phosphate, an acidic phosphoric acid ester such as monoisodecyl phosphate and diisodecyl phosphate. Among them, a halogen-containing phosphate ester, particularly tris(β-chloropropyl) phosphate, is preferable.

Examples of the condensed phosphoric acid ester include an aromatic condensed phosphoric acid ester such as trialkylpolyphosphate, resorcinol polyphenyl phosphate, bisphenol A polycredyl phosphate, and bisphenol A polyphenyl phosphate.

Examples of commercially available condensed phosphoric acid esters include "CR-733S", "CR-741", and "CR747", which are manufactured by Daihachi Chemical Industry Co., Ltd., "Adeka Stub PFR" and "FP-600" manufactured by ADEKA.

Among these, a monophosphate ester is preferable from the viewpoint of reducing the viscosity of the mixture of the polyol composition and the isocyanate composition of the present invention to facilitate the production of a polyurethane foam and from the viewpoint of improving the fire retardancy of the polyurethane foam, and tris(β-chloropropyl) phosphate is more preferable.

In the case of containing a phosphate ester, the content of the phosphate ester in the polyol solution is preferably 5 to 90 parts by mass, more preferably 15 to 80 parts by mass, and further preferably 25 to 70 parts by mass, with respect to 100 parts by mass of the polyol. By setting the content of the phosphate ester to be equal to or more than these lower limit values, the effects of containing the phosphate ester is likely to be exhibited. Moreover, by setting the content to be equal to or less than the upper limit values, the foaming of the polyurethane foam is not inhibited by the phosphate ester.

(Filler)

The polyol composition of the present invention preferably contains a filler. By containing a filler, various properties, such as fire retardancy, of the polyurethane foam can be more easily improved. The filler preferably includes a fire retardant. By using a fire retardant as a filler, it is possible to impart high fire retardancy to the polyurethane foam. The fire retardant used as a filler is a solid fire retardant. In the present invention, fire retardancy can be more effectively increased by using a solid fire retardant. A solid fire retardant is a fire retardant that is a solid at normal temperature (23°C) and normal pressure (1 atm). The solid fire retardant used in the present invention is preferably at least one selected from the group consisting of a phosphate-containing fire retardant, a red phosphorus fire retardant, a bromine-containing fire retardant, a boron-containing fire retardant, an antimony-containing fire retardant, a metal hydroxide, and an acicular filler.

Examples of the phosphoric acid salt-containing fire retardant include a phosphate composed of a salt with at least one metal or compound selected from various phosphoric acids, metals of Group IA to IVB of the Periodic Table, ammonia, an aliphatic amine, an aromatic amine, and a heterocyclic compound including nitrogen in the ring.

The phosphoric acid is not particularly limited, and examples thereof include a monophosphoric acid, a pyrophosphoric acid, a polyphosphoric acid.

Examples of the metals of Group IA to IVB of the Periodic Table include lithium, sodium, calcium, barium, iron(II), iron(III), and aluminum.

Examples of the aliphatic amine include methylamine, ethylamine, diethylamine, triethylamine, ethylenediamine, piperazine, and the like. Examples of the aromatic amine include aniline, o-toluidine, 2,4,6-trimethylaniline, anisidine, 3-(trifluoromethyl)aniline. Examples of the heterocyclic compound containing nitrogen in the ring include pyridine, triazine, melamine.

Specific examples of the phosphoric acid salt-containing fire retardant include a monophosphate such as aluminum triphosphate, a pyrophosphate, a polyphosphate. Here, the polyphosphate is not particularly limited, and examples thereof include ammonium polyphosphate, piperazine polyphosphate, melamine polyphosphate, ammonium amide polyphosphate, and aluminum polyphosphate.

One or more kinds of the above-described phosphoric acid salt-containing fire retardant can be used. In the present invention, aluminum triphosphate is preferable.

The red phosphorus fire retardant may be composed of red phosphorus alone, but may also be red phosphorus coated with a resin, a metal hydroxide, a metal oxide, or the like, or may be a mixture of red phosphorus with a resin, a metal hydroxide, a metal oxide or the like. The resin with which red phosphorus is coated or which is mixed with red phosphorus is not particularly limited, and examples thereof include thermosetting resins such as a phenol resin, an epoxy resin, an unsaturated polyester resin, a melamine resin, a urea resin, an aniline resin, a silicone resin. The compound with which red phosphorus is coated or which is mixed with red phosphorus is preferably a metal hydroxide from the viewpoint of fire retardancy. The metal hydroxide may be appropriately selected and used from among those described later.

The bromine-containing fire retardant is not particularly limited as long as it is a compound that contains bromine in its molecular structure and that is a solid at normal temperature and pressure. Examples thereof include a brominated aromatic ring-containing aromatic compound.

Examples of the brominated aromatic ring-containing aromatic compound include monomer-based organic bromine compounds such as hexabromobenzene, pentabromotoluene, hexabromobiphenyl, decabromobiphenyl, decabromodiphenyl ether, octabromodiphenyl ether, hexabromodiphenyl ether, bis(pentabromophenoxy)ethane, ethylenebis(pentabromophenyl), ethylenebis(tetrabromophthalimide), tetrabromobisphenol A.

Further, the brominated aromatic ring-containing aromatic compound may be a bromine compound polymer. Specifically, examples include a polycarbonate oligomer produced from brominated bisphenol A as a raw material, a brominated polycarbonate of a copolymer and the like of this polycarbonate oligomer and bisphenol A, a diepoxy compound produced by a reaction between brominated bisphenol A and epichlorohydrin. Further examples include a brominated epoxy compound such as a monoepoxy compound obtained by a reaction between a brominated phenol and epichlorohydrin, poly(brominated benzyl acrylate), a condensate of a brominated polyphenylene ether, a brominated bisphenol A, and a brominated phenol of cyanur chloride, a brominated(polystyrene), a poly(brominated styrene), a brominated polystyrene such as a crosslinked brominated polystyrene, a crosslinked or non-crosslinked brominated poly(-methylstyrene).

Further, the bromine-containing fire retardant may be a compound other than a brominated aromatic ring-containing aromatic compound, such as hexabromocyclododecane.

These bromine-containing fire retardants may be used alone or in combination of two or more. Further, among the above, a brominated aromatic ring-containing aromatic compound is preferable, and among them, a monomer-based organic bromine compound such as hexabromobenzene is preferable.

Examples of the boron-containing fire retardant used in the present invention include borax, a boron oxide, boric acid, a borate. Examples of the boron oxide include diboron trioxide, boron trioxide, diboron dioxide, tetraboron trioxide, tetraboron pentoxide.

Examples of the borate include a borate of an alkali metal, an alkaline earth metal, an element of Groups 4, 12, and 13 of the Periodic Table, and ammonium. Specifically, examples include an alkali metal borate salt such as lithium borate, sodium borate, potassium borate, and cesium borate, an alkaline earth metal borate salt such as magnesium borate, calcium borate, and barium borate, zirconium borate, zinc borate, aluminum borate, and ammonium borate.

The boron-containing fire retardant may be used alone or in combination of two or more.

The boron-containing fire retardant used in the present invention is preferably a borate, and more preferably zinc borate.

Examples of the antimony-containing fire retardant include an antimony oxide, an antimonate, a pyroantimonate. Examples of antimony oxide include antimony trioxide and antimony pentoxide. Examples of the antimonate include sodium antimonate, potassium antimonate. Examples of the pyroantimonate include sodium pyroantimonate, potassium pyroantimonate.

The antimony-containing fire retardant may be used alone or in combination of two or more. A preferable antimony-containing fire retardant used in the present invention is antimony trioxide.

Examples of the metal hydroxide used in the present invention include magnesium hydroxide, calcium hydroxide, aluminum hydroxide, iron hydroxide, nickel hydroxide, zirconium hydroxide, titanium hydroxide, zinc hydroxide, copper hydroxide, vanadium hydroxide, tin hydroxide. The metal hydroxide may be used alone or in combination of two or more. A preferrable metal hydroxide for use in the present invention is aluminum hydroxide.

Examples of the acicular filler include potassium titanate whisker, aluminum borate whisker, magnesium-containing whisker, silicon-containing whisker, wollastonite, sepiolite, zonolite, ellestadite, boehmite, rod-shaped hydroxyapatite, glass fiber, carbon fiber, graphite fiber, metal fiber, slag fiber, gypsum fiber, silica fiber, alumina fiber, silica alumina fiber, zirconia fiber, boron nitride fiber, boron fiber, stainless steel fiber.

One or more of these acicular fillers can be used.

The acicular filler used in the present invention has an aspect ratio (length / diameter) that is preferably in a range of 5 to 50, and more preferably in a range of 10 to 40. The aspect ratio can be determined by observing the acicular filler with a scanning electron microscope and measuring the length and width.

(Sedimentation prevention agent)

The polyol composition of the present invention may contain a sedimentation prevention agent as a filler. Using a sedimentation prevention agent enables sedimentation of the solid fire retardant and the like dispersed in the polyol composition to be prevented. Further, the use of a sedimentation prevention agent facilitates uniform dispersion of the solid fire retardant. The sedimentation prevention agent is generally a solid at normal temperature and pressure, and is usually solid content (insoluble content) in the polyol composition.

The sedimentation prevention agent is not particularly limited, but for example, it is preferable to use one kind or more selected from carbon black, powdered silica, organic clay, and the like. Among these, powdered silica is more preferable.

The carbon black used for the sedimentation prevention agent can be manufactured by a method such as a furnace method, a channel method, or a thermal method. A commercially available product may also be appropriately selected and used for the carbon black.

Further, as the powdered silica, fumed silica, colloidal silica, silica gel, and the like can be used. Among these, fumed silica is preferable. As the fumed silica, Aerosil (registered trademark) manufactured by Nippon Aerosil Co., Ltd., can be used.

The content of the sedimentation prevention agent is not particularly limited, and is, for example, 0.5 to 20 parts by mass, preferably 1 to 10 parts by mass, and more preferably 1.5 to 5 parts by mass, with respect to 100 parts by mass of the polyol. By setting the content of the sedimentation prevention agent within the above range, it is possible to prevent sedimentation of the solid fire retardant and improve the dispersibility of the solid fire retardant without increasing the solid content more than necessary.

As the filler, an inorganic filler other than the above-described fire retardant and sedimentation prevention agent may also be used. Examples of inorganic fillers that can be appropriate used include silica, diatomaceous earth, alumina, titanium oxide, calcium oxide, magnesium oxide, iron oxide, tin oxide, antimony oxide, a ferrite, calcium carbonate, magnesium carbonate, zinc carbonate, barium carbonate, dosonite, hydrotalcite, calcium sulfate, barium sulfate, calcium silicate, talc, clay, mica, montmorillonite, bentonite, active white clay, sepiolite, imogolite, sericite, glass beads, silica balloon, aluminum nitride, boron nitride, silicon nitride, carbon black, graphite, carbon balloons, charcoal powder, various metal powders, potassium titanate, magnesium sulfate, lead zirconate titanate, aluminum borate, molybdenum sulfide, silicon carbide, various magnetic powders, fly ash, silica-alumina fibers, and zirconia fibers. These inorganic fillers may be used alone or in combination of two or more.

When the polyol composition of the present invention contains a filler, the content thereof is preferably 10 to 150 parts by mass, more preferably 15 to 130 parts by mass, further preferably 30 to 120 parts by mass, and even further preferably 40 to 100 parts by mass, with respect to 100 parts by mass of the polyol. When the content of the filler is equal to or more than the lower limit values, it is possible to sufficiently impart properties such as fire retardancy to the polyurethane foam produced using the polyol composition. On the other hand, when the content of the filler is equal to or less than the upper limit values, the fluidity of the polyol is not reduced, the discharge flow rate of the polyol composition is sufficient, the polyol composition can be sufficiently mixed with the isocyanate composition, and various properties such as fire retardancy can be enhanced.

(Foam stabilizing agent)

The polyol composition of the present invention may contain a foam stabilizing agent for the purpose of facilitating foaming of the mixture of the polyol composition and the isocyanate composition.

Examples of the foam stabilizing agent include a surfactant such as a polyoxyalkylene-based foam stabilizing agent, for example a polyoxyalkylene alkyl ether, a silicone foam stabilizing agent, for example an organopolysiloxane. These foam stabilizing agents may be used alone or in combination of two or more.

The content of the foam stabilizing agent in the polyol composition of the present invention is preferably 0.1 to 10 parts by mass, more preferably 1 to 8 parts by mass, and further preferably 1 to 5 parts by mass, with respect to 100 parts by mass of the polyol. When the content of the foam stabilizing agent is equal to or more than these lower limit values, the mixture of the polyol composition and the isocyanate composition can be easily foamed, and therefore a homogeneous polyurethane foam can be obtained. Further, when the content of the foam stabilizing agent is equal to or less than these upper limit values, the balance between the production cost and the obtained effect is optimal.

(Other components)

Further, the polyol composition of the present invention can optionally include, as long as the object of the present invention is not impaired, one or more selected from an additive such as a phenol-based, amine-based, sulfur-based or other antioxidant, a heat stabilizer, a metal damage inhibitor, an antistatic agent, a stabilizer, a cross-linking agent, a lubricant, a softener, and a pigment.

(Method for producing polyol composition)

The method for producing the polyol composition of the present invention is not particularly limited. Each of the components other than the low boiling point compound are stirred with a known stirring device, then the foaming agent is added to the obtained raw material and stirred, and the resultant mixture is filled into a container such as an empty aerosol can. The aerosol can is sealed with a stem valve, and the low boiling point compound is injected through the stem valve to produce the polyol composition filled in the container.

[Isocyanate composition]

As the polyisocyanate used in the isocyanate composition, a known polyisocyanate compound used for forming polyurethane foam can be used. Examples of the polyisocyanate compound include an aromatic polyisocyanate, an alicyclic polyisocyanate, an aliphatic polyisocyanate, and the like.

Examples of the aromatic polyisocyanate include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, polymethylene polyphenyl polyisocyanate, and the like.

Examples of the alicyclic polyisocyanate include cyclohexylene diisocyanate, methylcyclohexylene diisocyanate, isophorone diisocyanate, dicyclohexylmethane diisocyanate, dimethyldicyclohexylmethane diisocyanate, and the like.

Examples of the aliphatic polyisocyanate include methylene diisocyanate, ethylene diisocyanate, propylene diisocyanate, tetramethylene diisocyanate, hexamethylene diisocyanate, and the like.

Among these, from the viewpoint of ease of use and availability, an aromatic polyisocyanate is preferable, and polymethylene polyphenyl polyisocyanate is more preferable. One kind of polyisocyanate compound may be used alone, or two or more kinds may be mixed and used.

The isocyanate composition usually further contains a low boiling point compound. As the low boiling point compound, the above-described low boiling point compound having a boiling point of 0°C or lower can be used without particular limitation. The low boiling point compound used in the polyisocyanate composition may be the same as or different from the low boiling point compound used in the polyol composition.

The percentage of the low boiling point compound contained in the polyisocyanate composition is preferably 1 to 30% by mass, more preferably 2 to 25% by mass, and further preferably 3 to 20% by mass. When the content of the low boiling point compound is equal to or more than the lower limit values, a sufficient discharge force can be obtained, and when the content is equal to or less than the upper limit values, the foam density is not too low and appropriate physical properties can be obtained.

Further, the isocyanate composition may appropriately contain known additives contained in polyisocyanate compounds before mixing with the polyol composition.

The polyol composition and the isocyanate composition preferably have substantially the same volume as each other. Specifically, the volume ratio of the isocyanate composition to the polyol composition is preferably 0.8 to 1.2, more preferably 0.9 to 1.1, and further preferably 0.95 to 1.05.

[Polyurethane composition]

The polyurethane composition according to the present invention is formed from a mixture in which the polyol composition and the isocyanate composition of the present invention have been mixed by a stationary mixer.

(Isocyanate index)

The isocyanate index of the polyurethane composition of the present invention is not particularly limited, and is preferably 200 or more. If the amount of the polyisocyanate compound is excessive with respect to the polyol compound, a large amount of trimerization catalyst is required, but in the present invention, a specific amount of a resinification catalyst is used together with the trimerization catalyst, and so the amount of the trimerization catalyst can be reduced. When the isocyanate index is equal to or more than these lower limit values, the amount of polyisocyanate compound with respect to the polyol compound is in excess, so that isocyanurate bonds due to a trimer of the polyisocyanate compound tend to form, and as a result the fire retardancy of the polyurethane foam is improved. In addition, the incombustibility can be imparted. Further, when the isocyanate index is equal to or more than this lower limit values, it is easier to produce a polyurethane foam having isocyanurate bonds, that is, a polyurethane foam that combines a high level of fire retardancy with a high level of thermal insulation. From these viewpoints, the isocyanate index is more preferably 250 or more, further preferably 300 or more, and particularly preferably 350 or more.

Further, the isocyanate index is preferably 1000 or less, more preferably 800 or less, and particularly preferably 500 or less. When the isocyanate index is equal to or less than the upper limit values, the balance between the fire retardancy of the obtained polyurethane foam and the production cost is good.

The isocyanate index can be calculated by the following method.

$$\text{Isocyanate index} = \text{equivalent amount of polyisocyanate compound} \div$$
$$(\text{equivalent amount of polyol compound} + \text{equivalent amount of water}) \times 100$$

Here, each of the equivalent amounts can be calculated as follows.

$$\text{Equivalent amount of polyisocyanate compound} = \text{amount of polyisocyanate compound used (g)} \times \text{NCO content (\% by mass)} / \text{molecular weight of NCO (mol)} \times 100$$

$$\text{Equivalent amount of polyol compound} = \text{OHV} \times \text{amount of polyol compound used (g)} \div \text{molecular weight of KOH (mmol)}$$

OHV is the hydroxyl value (mgKOH/g) of the polyol compound.

$$\text{Equivalent amount of water} = \text{amount of water used (g)} / \text{molecular weight of water (mol)} \times \text{number of OH groups of water}$$

In each of the above formulas, the molecular weight of NCO is 42 (mol), the molecular weight of KOH is 56100 (mmol), the molecular weight of water is 18 (mol), and the number of OH groups in water is 2.

(Method for producing polyurethane composition)

Although the method for producing the polyurethane composition of the present invention is not particularly limited, the polyurethane composition is formed by mixing the polyol composition and the isocyanate composition of the present invention with a stationary mixer and discharging the resultant mixture from a discharger such as a caulking gun or a sprayer.

The method for forming the polyurethane composition of the present invention with a caulking gun is performed, for example, as follows. The polyol composition and the isocyanate composition of the present invention are each discharged from the cartridge container in which they are filled, the two compositions are mixed in a stationary mixer such as a static mixer, and the resultant mixture is sprayed from a caulking gun to foam.

The method for forming the polyurethane composition of the present invention by spraying is performed, for example, as follows. The polyol composition and the isocyanate composition of the present invention are each discharged from the pressure-resistant container for spraying in which they are filled, the two compositions are mixed in a stationary mixer such as a static mixer, and the mixture is sprayed from the tip of the stationary mixer to foam.

(Applications of polyurethane composition)

In the present invention, the polyurethane composition can be used for various applications, but it is preferably used as a thermal insulator. Further, it is preferable that the polyurethane composition constitute a polyurethane foam. The polyurethane composition has a large number of cells, and therefore exhibits a thermal insulating effect.

In particular, it is more preferable to use the polyurethane composition as a thermal insulator for a vehicle or a building. The term vehicle includes rail carriages, automobiles, ships, aircraft, and the like. The polyurethane composition of the present invention has a high fire retardancy due to using the polyol composition described above. Therefore, from the viewpoint of disaster prevention and safety, the polyurethane composition of the present invention can be suitably used for vehicle or building applications.

Moreover, the mixing system of the present invention is suitable for use in small devices, and can be suitably used for repair applications as well.

Example

The present invention will now be described below in more detail with reference to examples, but the present invention is not limited thereto.

Each of the components used in the examples and comparative examples is shown below, and the content (parts by mass) of each component is shown in Table 1.

1) Polyol compound: Polyester polyol phthalate (Maximol RLK-087 manufactured by Kawasaki Kasei Chemicals, hydroxyl value = 200 mgKOH/g)
2) Trimerization catalyst: Carboxylic acid quaternary ammonium salt (DABCO TMR-7 manufactured by Evonik Japan Co., Ltd., concentration 45 to 55% by mass, diluted with ethylene glycol)

3) Resinification catalyst: Imidazole derivative (concentration 65 to 75% by mass, KL No. 390, manufactured by Kao Corporation)

4) Liquid fire retardant (phosphate ester): Tris(β-chloropropyl) phosphate (TMCPP manufactured by Daihachi Chemical Co., Ltd.)

5) Solid fire retardant (filler):

- Red phosphorus: Nova Excel 140 manufactured by Rin Kagaku Kogyo Co., Ltd.
- Zinc borate: Firebrake ZB manufactured by Hayakawa & Co., Ltd.
- Bromine-based fire retardant: Ethylene bis(pentabromophenyl), SAYTEX (registered trademark) 8010 manufactured by Albemarle

6) Sedimentation prevention agent: Fumed silica (Aerosil R976S manufactured by Nippon Aerosil Co., Ltd.)

7) Low boiling point compound

- DME / LPG: Mixture of dimethyl ether (DME) and liquefied petroleum gas (LPG), mixing ratio: DME: LPG = 6: 4 (mass ratio) (LPG-D, manufactured by Iwatani Gas, boiling point: 0°C or less)

    Boiling point of DME: -24°C
    Boiling point of the propane constituting the LPG: -42°C
    Boiling point of the isobutane constituting the LPG: -11.7°C
    Boiling point of the normal butane constituting the LPG: -0.5°C

- HFO-1234ze (1,3,3,3-tetrafluoropropene): Solstice (registered trademark) GBA, manufactured by Honeywell, boiling point: -19°C
- Nitrogen, boiling point: -195.8°C

8) Polyisocyanate: Diphenylmethane-4,4'-diisocyanate (MDI), DESMODUR (registered trademark) 44V20L, manufactured by Bayer

Examples 1 to 10 and Comparative Examples 1 to 3

The components other than the low boiling point compound were kneaded in the blending amounts shown in Table 1, and the kneaded product was poured into an empty aerosol can. The aerosol can was then sealed with a stem valve. The low boiling point compound was injected from the stem valve so as to have the mass shown in Table 1, to thereby obtain a first container.

Next, the polyisocyanate was poured into another empty aerosol can so that the mass shown in Table 1 was obtained, and the aerosol can was sealed with a stem valve. The low boiling point compound was injected from the stem valve so as to have the mass shown in Table 1, to thereby obtain a second container.

The re-dischargeability of the mixture and the fire retardancy of the polyurethane foam were evaluated as follows. The results are shown in Table 1.

(1) Re-dischargeability of mixture (clogging)

The stem valves of the first container and the second container were simultaneously pressed for 5 seconds to discharge the polyol composition and the polyisocyanate composition, and were injected into a static mixer (product name: ACF Helix 8-18, manufactured by Ritter) using a tube. These compositions were mixed in the mixer and discharged to form a polyurethane foam.

After discharging for 5 seconds and leaving for 30 seconds, the stem valves were again pressed for 5 seconds in the same manner as above to discharge each of the compositions, which were then left for 30 seconds. This operation of discharging for 5 seconds and leaving for 30 seconds was repeated, and re-dischargeability was evaluated based on how many times discharge was possible. The evaluation criteria were as follows.

    Fair: Possible to discharge 3 times or more.
    Poor: Discharge was possible only up to 2 times.

(2) Fire retardancy of polyurethane foam

The stem valves of the first container and the second container were simultaneously pressed to discharge the polyol composition and the polyisocyanate composition, and were injected into a static mixer (described above) using a tube. These compositions were mixed in the mixer and discharged to form a polyurethane foam on a 12.5 mm thick gypsum board. After the polyurethane foam was cured, the gypsum board and polyurethane foam were cut into 30 mm-thick pieces that were 10 cm × 10 cm. The obtained samples were heated for 5 minutes at a radiant heat intensity of 50 kW/m$^2$ according to the test method of ISO-5660, and the total calorific value was measured with a cone calorimeter. The evaluation criteria were as follows.

Excellent: Total calorific value for 5 minutes is 8 MJ or less
Fair: Total calorific value for 5 minutes exceeds 8 MJ and is 10 MJ or less
Poor: Total calorific value for 5 minutes exceeds 10 MJ

(3) Internal pressure measurement method

Each container filled with the polyol composition and the polyisocyanate composition in each example and comparative example was dipped in a constant temperature water bath of 35°C for 90 minutes, then a Bourdon tube pressure gauge was connected to the stem valve of the containers, and the internal pressure of each container was measured.

Table 1

| Polyol composition | | | | Example 1 | 2 | 3 | 4 | 5 | 6 | 7 | 8 | 9 | 10 | Comparative Example 1 | 2 | 3 |
|---|---|---|---|---|---|---|---|---|---|---|---|---|---|---|---|---|
| Polyol composition | Polyol | | RLK-087 | 250 | 250 | 250 | 250 | 250 | 170 | 170 | 170 | 170 | 170 | 250 | 250 | 250 |
| | Catalyst | Trimerization catalyst | DABCO TMR-7 | 20 | 20 | 20 | 20 | 20 | 30 | 30 | 30 | 30 | 30 | 20 | 20 | 20 |
| | | Resinification catalyst | KL No. 390 | 30 | 30 | 30 | 30 | 30 | 45 | 45 | 45 | 45 | 45 | 30 | 30 | 30 |
| | Low boiling point compound | DME/LPG | | | | | | | | | | 50 | | | | |
| | | HFO | Solstice GBA | 40 | 45 | 35 | 40 | 40 | 60 | 60 | 60 | | 45 | 20 | 40 | 40 |
| | | Nitrogen | | | | | | | | | | | 0.3 | | | |
| | Foaming agent | Water | | 0.5 | 0.5 | 0.5 | 0.5 | 0.5 | 1.2 | 1.2 | 1.2 | 1.2 | 1.2 | 0.5 | 0.5 | 0.5 |
| | Phosphate | | TMCPP | 100 | 100 | 100 | 100 | 100 | 80 | 80 | 80 | 80 | 80 | 100 | 100 | 100 |
| | Filler | Red phosphorus | Nova Excel 140 | | | | | | 130 | | | 130 | 130 | | | |
| | | Zinc borate | FIREBREAK ZB | | | | | | | 130 | | | | | | |
| | | Bromine-based fire retardant | SAYTEX8010 | | | | | | | | 130 | | | | | |
| | Sedimentation prevention agent | | Aerosil R976S | | | | | | 3 | 3 | 3 | 3 | 3 | | | |
| Isocyanate composition | Polyisocyanate | | DESMODUR 44V20L | 420 | 420 | 420 | 420 | 420 | 420 | 420 | 420 | 420 | 420 | 420 | 420 | 420 |
| | Low boiling point compound | DME/LPG | | | | | | | | | | | | | | |
| | | HFO | Solstice GBA | 30 | 50 | 25 | 30 | 30 | 30 | 30 | 30 | 45 | 40 | 15 | 30 | 30 |
| | | Nitrogen | | | | | | | | | | | 0.2 | | | |
| Isocyanate index | | | | 333 | 333 | 333 | 333 | 333 | 426 | 426 | 426 | 426 | 426 | 333 | 333 | 333 |

(continued)

| | | Example | | | | | | | | | | Comparative Example | | |
|---|---|---|---|---|---|---|---|---|---|---|---|---|---|---|---|
| | | 1 | 2 | 3 | 4 | 5 | 6 | 7 | 8 | 9 | 10 | 1 | 2 | 3 |
| Internal pressure | Polyol composition | 0.5 | 0.6 | 0.3 | 0.5 | 0.5 | 0.6 | 0.6 | 0.6 | 0.6 | 0.6 | 0.2 | 0.6 | 0.6 |
| | Isocyanate composition | 0.5 | 0.7 | 0.3 | 0.5 | 0.5 | 0.5 | 0.5 | 0.5 | 0.5 | 0.5 | 0.2 | 0.5 | 0.5 |
| Mixer length (mm) | | 140 | 140 | 140 | 190 | 80 | 140 | 140 | 140 | 140 | 140 | 140 | 20 | 240 |
| Evaluation results | Clogging | Fair | Fair | Fair | Fair | Fair | Fair | Fair | Fair | Fair | Fair | Poor | Fair | Poor |
| | Fire retardancy | Fair | Fair | Fair | Fair | Fair | Excellent | Excellent | Excellent | Excellent | Excellent | Fair | Poor | Fair |
| * Each of the values for the polyol composition and the isocyanate composition are in parts by mass, and the units of the values for the internal pressure are in MPa. | | | | | | | | | | | | | | |

In the examples, both the re-dischargeability evaluation (clogging) and the fire retardancy evaluation were good. On the other hand, clogging occurred in Comparative Example 1, in which the internal pressure of each of the first container filled with the polyol composition and the second container filled with the isocyanate composition were less than 0.3 MPa. In addition, in Comparative Example 2, in which a stationary mixer having a mixer portion length of less than 30 mm was used, the fire retardancy of the polyurethane foam produced was found to be insufficient. In Comparative Example 3, in which a stationary mixer having a mixer portion length exceeding 230 mm, curing progressed in the mixer and clogging occurred.

Reference Signs List

| | |
|---|---|
| 10 | mixing system |
| 11 | first container |
| 12 | second container |
| 11A, 12A | discharge port |
| 11B, 12B | feed line |
| 13 | stationary mixer |
| 13A | tubular body |
| 13B | mixer element |
| 13C | tip |
| 14 | discharge gun |
| 14A | lever |
| 20 | mixing system |

**Claims**

1. A mixing system comprising:

   a first container filled with a polyol composition;
   a second container filled with an isocyanate composition; and
   a stationary mixer configured to mix the polyol composition discharged from the first container and the isocyanate composition discharged from the second container, wherein
   the polyol composition comprises a polyol, a catalyst, and a low boiling point compound having a boiling point of less than 0°C,
   the isocyanate composition comprises an isocyanate compound and a low boiling point compound having a boiling point of less than 0°C,
   the first container and the second container each have an internal pressure in a range of 0.3 to 1.0 MPa at 35°C, and
   a mixer portion of the stationary mixer has a length of 30 to 230 mm.

2. The mixing system according to claim 1, wherein the polyol composition comprises a trimerization catalyst as the catalyst.

3. The mixing system according to claim 1 or 2, wherein an injection port of the stationary mixer is divided into two holes.

4. The mixing system according to any one of claims 1 to 3, wherein the polyol composition further comprises a filler.

5. The mixing system according to any one of claims 1 to 4, wherein the low boiling point compound includes a hydrofluoroolefin.

6. The mixing system according to any one of claims 1 to 5, wherein the low boiling point compound includes at least one selected from air, carbon dioxide, and an inert gas.

7. The mixing system according to claim 6, wherein the inert gas is nitrogen.

8. The mixing system according to any one of claims 1 to 7, further comprising a discharge gun.

Fig. 1

Fig. 2

<table>
<tr><td colspan="2" align="center">**INTERNATIONAL SEARCH REPORT**</td><td colspan="2">International application No.<br><br>**PCT/JP2021/036004**</td></tr>
</table>

| **A.** | **CLASSIFICATION OF SUBJECT MATTER** |
|---|---|

***B01F 23/40***(2022.01)i; ***B01F 25/42***(2022.01)i; *C08G 101/00*(2006.01)n; ***C08G 18/00***(2006.01)i
FI:   C08G18/00 D; C08G18/00 H; B01F3/08 Z; B01F5/00 E; C08G101:00

According to International Patent Classification (IPC) or to both national classification and IPC

| **B.** | **FIELDS SEARCHED** |
|---|---|

Minimum documentation searched (classification system followed by classification symbols)
B01F1/00-5/26; C08G101/00; C08G18/00-18/87

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2020-90582 A (SEKISUI CHEMICAL CO., LTD.) 11 June 2020 (2020-06-11) claims, paragraphs [0008], [0038], [0056], [0067], [0070], examples 11, 12 | 1-5, 8 |
| Y | | 1-8 |
| Y | JP 2007-231256 A (SANYO CHEMICAL IND. LTD.) 13 September 2007 (2007-09-13) claims, paragraphs [0006], [0034], [0044], [0045] | 1-8 |
| A | WO 2017/199608 A1 (DIC CORP.) 23 November 2017 (2017-11-23) claims, paragraphs [0023], [0027], [0033] | 1-8 |
| A | JP 2000-511839 A (BAYER AG) 12 September 2000 (2000-09-12) claims, fig. 1 | 1-8 |
| A | CN 109485903 A (BEIJING QISHUN JINGTENG TECH. CO., LTD.) 19 March 2019 (2019-03-19) claims, paragraphs [0042]-[0050], examples | 1-8 |
| E, A | WO 2021/193871 A1 (SEKISUI CHEMICAL CO., LTD.) 30 September 2021 (2021-09-30) claims | 1-8 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 November 2021** | **14 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2021/036004** |

| C. | DOCUMENTS CONSIDERED TO BE RELEVANT | |
| --- | --- | --- |
| Category* | Citation of document, with indication, where appropriate, of the relevant passages | Relevant to claim No. |
| E, A | WO 2021/193872 A1 (SEKISUI CHEMICAL CO., LTD.) 30 September 2021 (2021-09-30)<br>claims | 1-8 |

Form PCT/ISA/210 (second sheet) (January 2015)

<table>
<tr><td colspan="2"><b>INTERNATIONAL SEARCH REPORT</b><br>Information on patent family members</td><td colspan="2">International application No.<br><br><b>PCT/JP2021/036004</b></td></tr>
</table>

| Patent document cited in search report | Publication date (day/month/year) | Patent family member(s) | Publication date (day/month/year) |
|---|---|---|---|
| JP 2020-90582 A | 11 June 2020 | (Family: none) | |
| JP 2007-231256 A | 13 September 2007 | (Family: none) | |
| WO 2017/199608 A1 | 23 November 2017 | CN 109153761 A | |
| JP 2000-511839 A | 12 September 2000 | US 6127442 A<br>claims, fig. 1<br>WO 1997/047453 A1<br>CN 1221368 A | |
| CN 109485903 A | 19 March 2019 | (Family: none) | |
| WO 2021/193871 A1 | 30 September 2021 | (Family: none) | |
| WO 2021/193872 A1 | 30 September 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006169474 A
- JP 11049837 A
- WO 2020067139 A